(19) Europäisches Patentamt
European Patent Office
Office européen des brevets

(11) **EP 4 451 021 A1**

(12) **EUROPEAN PATENT APPLICATION**

(43) Date of publication:
**23.10.2024 Bulletin 2024/43**

(21) Application number: **23168262.6**

(22) Date of filing: **17.04.2023**

(51) International Patent Classification (IPC):
**G02B 6/02** (2006.01)

(52) Cooperative Patent Classification (CPC):
**G02B 6/02347; G02B 6/02333; G02B 6/02361**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ASML Netherlands B.V.**
**5500 AH Veldhoven (NL)**

(72) Inventors:
• **ABDOLVAND, Amir**
**5500 AH Veldhoven (NL)**

• **NI, Yongfeng**
**5500 AH Veldhoven (NL)**
• **BUIJS, Robin, Daniel**
**5500AH Veldhoven (NL)**
• **DEN BOEF, Arie, Jeffrey**
**55oo AH Veldhoven (NL)**
• **PROVINO, Laurent, Jean, François**
**22300 Lannion (FR)**
• **VAN SCHAIJK, Theodorus, Thomas, Marinus**
**5500 AH Veldhoven (NL)**

(74) Representative: **ASML Netherlands B.V.**
**Corporate Intellectual Property**
**P.O. Box 324**
**5500 AH Veldhoven (NL)**

(54) **PHOTONIC CRYSTAL FIBER**

(57)    A photonic crystal fiber (10) comprising a core region and a cladding region surrounding the core region. The core region and the cladding region comprise a material (12) having a first refractive index, the cladding region additionally comprising a plurality of microstructures (14) extending from an input end of the fiber along a longitudinal axis of the fiber to an output end of the fiber, the plurality of microstructures (14) having a second refractive index which less than the first refractive index. The plurality of microstructures in the cladding region are arranged in a cross-sectional pattern comprising at least one ring of microstructures surrounding the core region, wherein a diameter of the core region Dcore is at least 16 $\mu$m, the photonic crystal fiber having a transmission bandwidth of 200 nm or more.

FIG. 10A

EP 4 451 021 A1

## Description

FIELD

The present invention relates to a photonic crystal fiber.

## BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such process, the resolution formula may be expressed as $CD = k_1 \times \lambda/NA$, where $\lambda$ is the wavelength of radiation employed, NA is the numerical aperture of the projection optics in the lithographic apparatus, CD is the "critical dimension" (generally the smallest feature size printed, but in this case half-pitch) and ki is an empirical resolution factor. In general, the smaller ki the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

In the field of lithography, many measurement systems may be used, both within a lithographic apparatus and external to a lithographic apparatus. Generally, such a measurements system may use a radiation source to irradiate a target with radiation, and a detection system operable to measure at least one property of a portion of the incident radiation that scatters from the target. An example of a measurement system that is external to a lithographic apparatus is an inspection apparatus or a metrology apparatus, which may be used to determine properties of a pattern previously projected onto a substrate by the lithographic apparatus. Such an external inspection apparatus may, for example, comprise a scatterometer. Examples of measurement systems that may be provided within a lithographic apparatus include: a topography measurement system (also known as a level sensor); a position measurement system (for example an interferometric device) for determining position of a reticle or wafer stage; and an alignment sensor for determining a position of an alignment mark. These measurement devices may use electromagnetic radiation to perform the measurement.

Different types of radiation may be used to interrogate different types of properties of a pattern. Some measurements system may use a broadband radiation source. Such a broadband radiation source may be a supercontinuum source and may comprise an optical fiber having a non-linear medium through which a pulsed pump radiation beam is propagated to broaden a spectrum of the radiation.

A lithographic apparatus and/or a metrology apparatus may utilize a fiber to deliver radiation originating from a radiation source to another component of the apparatus e.g. a sensor. Among various sensors, those which require broadband light delivery in a single spatial mode with a constant phase front, typically use endlessly single mode photonic crystal fibers (ESM-PCF). Single modes fibers typically have very small cores, with mode profiles around 10 $\mu$m in diameter. For example, US10649136 discloses a microstructured delivery fiber with a core region having a diameter up to about 15 $\mu$m.

## SUMMARY

Whilst known photonic crystal fibers for single mode light delivery over long distances (> 1 m) have a small core diameter (diameters up to 15 $\mu$m), the inventors of the present invention have identified a number of advantages of a photonic crystal fiber for single mode light delivery having a larger core diameter.

In a first aspect of the invention, there is provided a photonic crystal fiber comprising: a core region; a cladding region surrounding the core region; wherein the core region and the cladding region comprise a material having a first refractive index, the cladding region additionally comprising a plurality of microstructures extending from an input end of the fiber along a longitudinal axis of the fiber to an output end of the fiber, the plurality of microstructures having a second refractive index which is less than the first refractive index; wherein the plurality of microstructures in the cladding region are arranged in a cross-sectional pattern comprising at least one ring of microstructures surrounding the core region, wherein a diameter of the core region is at least 16 $\mu$m, the photonic crystal fiber having a transmission bandwidth of 200 nm or more.

The inventors have identified that a small core size results in increased optical intensity which can trigger unwanted nonlinear effects due to light-induced contamination. By having the diameter of the core region being at least 16 $\mu$m the optical intensity at the output of the fiber is reduced, since the intensity is inversely proportional to the fiber core diameter squared, thereby avoiding these unwanted nonlinear effects and increasing the lifetime of the fiber.

In some applications, the output end of the fiber is magnified and imaged on a mark. For a given illumination area on a wafer, a small fiber core diameter means more magnification is needed, which results in larger aberrations. For a given illumination area on a wafer, the diameter of the core region being at least 16 $\mu$m means that less magnification is needed, which may approach 1:1 imaging, which simplifies optical design, typically reducing aberration, and improves the accuracy of the measurement system.

Some measurement systems require highly stable fiber coupling, with relative stability as good as $10^{-4}$. Stable fiber coupling requires that the incident beam is focused onto the fiber with a position stability much better than this mode profile diameter, so stable at submicron level. The diameter of the core region being at least 16 $\mu$m advantageously makes it easier to couple light into the fiber in a stable manner. Furthermore, with a larger core diameter (the diameter of the core region being at least 16 $\mu$m) it is easier to achieve low insertion loss without sophisticated alignment and manufacturing methods.

In implementations whereby the photonic crystal fiber is mechanically spliced to another fiber, the diameter of the core region being at least 16 $\mu$m makes the mechanical splicing easier to perform.

A ratio between a diameter of each of the microstructures and a pitch of the microstructures may be less than 0.42, preferably less than 0.37. This ratio may be between 0.35 and 0.40.

The photonic crystal fiber may have a transmission loss for a fundamental mode of less than 0.5 dB/m within the transmission bandwidth (e.g. covering the whole range from 500 nm to 900 nm). The photonic crystal fiber may have a transmission loss for a fundamental mode of less than 0.1 dB/m within the transmission bandwidth (e.g. covering the range from approximately 550nm to 800nm). The photonic crystal fiber may have this transmission loss when the fiber is bent with a bending diameter of at least 10 cm, preferably when bent with a bending diameter of between 10 cm and 12 cm. When a photonic crystal fiber is bent, higher order modes experience a higher propagation loss, and therefore optical power delivered by them leaks out of the fiber, making the fiber practically single mode. All the power remained is now transported in the single fundamental mode. This bend may be present directly after light in-coupling, or shortly before light out-coupling, depending on practical implementations. When the fiber is straight, the transmission loss for a fundamental mode may be less than 50dB/km between 500nm and 900nm.

The geometrical diameter of the core region may be given by 4 times a pitch ($\Lambda$) of the microstructures minus a diameter (d) of each of the microstructures, i.e. $D_{core} = 4\Lambda - d$.

A pitch of the microstructures may be less than 5 $\mu$m.

The cross-sectional pattern may comprise a plurality of rings of microstructures surrounding the core region. Having multiple rings of microstructures surrounding the core region advantageously reduces the confinement loss of the photonic crystal fiber.

The cross-sectional pattern may comprise at least six rings of microstructures surrounding the core region, preferably at least seven rings of microstructures surrounding the core region, preferably at least eight rings of microstructures surrounding the core region.

A ring of microstructures immediately adjacent to the core region may have twelve microstructures. This advantageously ensures that the photonic crystal fiber is single mode for at least one wavelength within the transmission bandwidth, while featuring the large core diameter of at least 16 $\mu$m.

The plurality of microstructures may comprise a medium having the second refractive index.

The medium may be air such that the plurality of microstructures are hollow. The hollow microstructures are advantageously more robust to bending of the photonic crystal fiber

Alternatively, the medium may be a solid material, for example glass such as doped silica. The doped silica microstructures are more sensitive to bending than hollow microstructure, however the doped silica microstructures are advantageously easier to manufacture and ends of a photonic crystal fiber having doped silica microstructures are easier to polish than ends of a photonic crystal fiber having hollow microstructures

The doped silica may comprise silica doped with fluorine, wherein the mole percentage of the fluorine is optionally in a range of 1-10%, further optionally in a range of 3-8%. This mole percentage of the fluorine advantageously makes the fiber more robust to bending, and also reduces the confinement loss.

The material having the first refractive index may be silica.

The diameter of the core region may be at least 20 $\mu$m.

The diameter of the core region is less than 50 $\mu$m, preferably less than 47 $\mu$m.

The transmission bandwidth of the delivery fiber may comprise wavelengths within a range of 200 nm to 2500 nm, preferably 400 nm to 2000 nm.

According to another aspect of the present invention there is provided a lithographic apparatus comprising the photonic crystal fiber according to any of the embodiments described herein.

According to another aspect of the present invention there is provided a metrology apparatus comprising the photonic crystal fiber according to any of the embodiments described herein.

The metrology apparatus may further comprise a light source and a sensor for measuring a parameter of interest of a structure on a substrate and wherein the photonic crystal fiber is arranged to deliver light from the light source to the sensor and/or between components of the sensor.

The metrology apparatus may further comprise a light source and a sensor for measuring a parameter of interest of a structure on a substrate and wherein the photonic crystal fiber is arranged to deliver light between components of the sensor.

According to another aspect of the present invention there is provided a holographic metrology apparatus comprising the photonic crystal fiber according to any of the embodiments described herein.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry metrology tool used as a metrology device, which may comprise a photonic crystal fiber according to embodiments of the invention;
- Figure 5 depicts a schematic overview of a level sensor metrology tool which may comprise a photonic crystal fiber according to embodiments of the invention;
- Figure 6 depicts a schematic overview of an alignment sensor metrology tool which may comprise a photonic crystal fiber according to embodiments of the invention;
- Figure 7 depicts schematically an example of a dark field digital holographic microscope (df-DHM) which may comprise a photonic crystal fiber according to embodiments of the invention, the df-DHM operated in a sequential acquisition scheme;
- Figure 8 depicts schematically a df-DHM which may comprise a photonic crystal fiber according to embodiments of the invention, the df-DHM operated in a parallel acquisition scheme;

- Figure 9A depicts schematically a df-DHM which may comprise a photonic crystal fiber according to embodiments of the invention, the df-DHM operated in a parallel acquisition scheme;
- Figure 9B depicts a k-space of the df-DHM illustrated in Figure 9A with respect to an objective lens of the df-DHM;
- Figure 9C depicts an image spectrum in the spatial frequency domain of diffraction orders generated following illumination of a metrology target using the df-DHM of Figure 9A;
- Figure 10A and 10B depict a photonic crystal fiber and dimensions of the photonic crystal fiber;
- Figure 11A illustrates example loss behaviour of a fundamental mode propagating through photonic crystal fibers each having 7 rings of microstructures but having differing values of normalized inclusion diameter (d/A);
- Figure 11B illustrates example loss behaviour of higher order modes propagating through photonic crystal fibers each having 7 rings of microstructures but having differing values of normalized inclusion diameter (d/A);
- Figure 12A illustrates example loss behaviour of a fundamental mode propagating through photonic crystal fibers each having 8 rings of microstructures but having differing values of normalized inclusion diameter (d/A);
- Figure 12B illustrates example loss behaviour of higher order modes propagating through photonic crystal fibers each having 8 rings of microstructures but having differing values of normalized inclusion diameter (d/A);
- Figure 13A illustrates example transmission loss spectra for the fundamental mode propagating through a photonic crystal fiber when it has 7 rings of microstructures and when it has 8 rings of microstructures; and
- Figure 13B illustrates example transmission loss spectra for the first two higher-order modes propagating through a photonic crystal fiber when it has 7 rings of microstructures and when it has 8 rings of microstructures.

DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

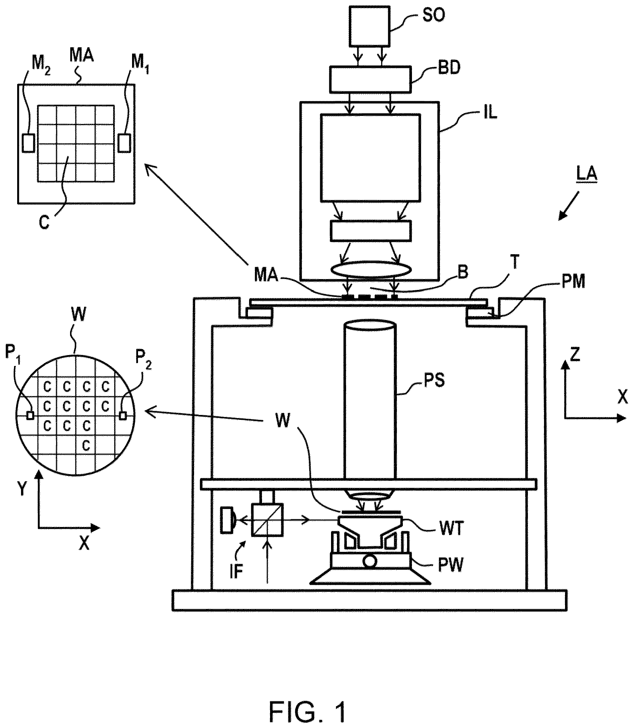

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C. As shown in Figure 1, a photonic crystal fiber (PCF) may be used to deliver the radiation beam from the radiation source SO to the beam delivery system BD. A PCF in accordance with any of the embodiments described herein may be used in a lithographic apparatus LA such as that depicted in Figure 1 (e.g. to deliver the radiation beam from the radiation source SO to the beam delivery system BD).

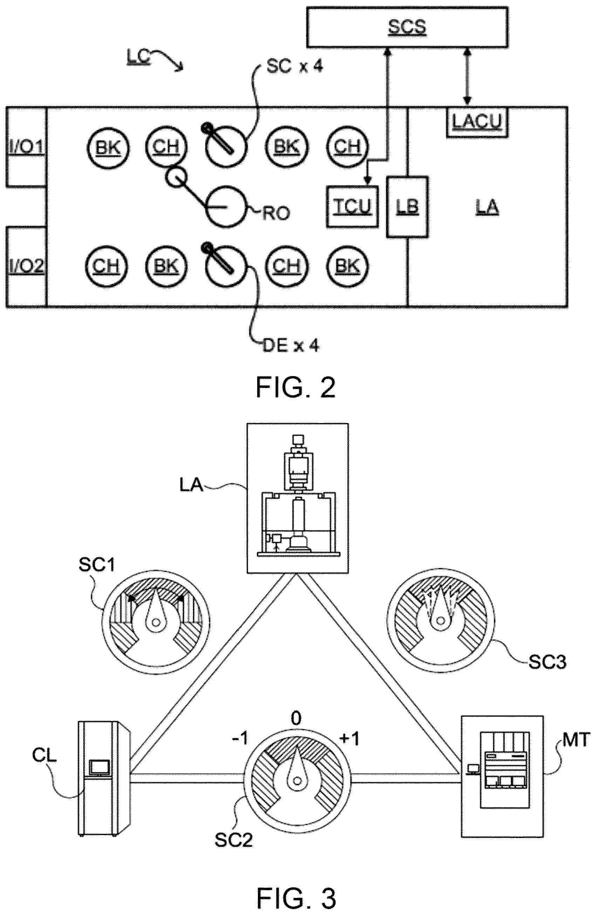

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers

(also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

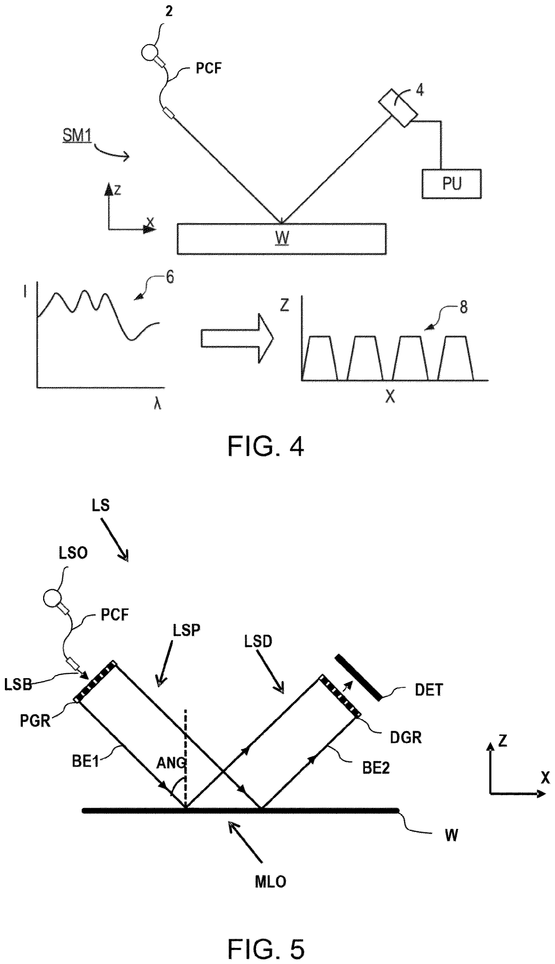

A metrology apparatus, such as a scatterometer, is depicted in Figure 4. It comprises a broadband (white light) radiation projector 2 which projects radiation onto a substrate W. The reflected or scattered radiation is passed to a spectrometer detector 4, which measures a spectrum 6 (i.e. a measurement of intensity as a function of wavelength) of the specular reflected radiation. From this data, the structure or profile 8 giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer. As shown in Figure 4, a PCF may be used to deliver the radiation from the broadband (white light) radiation projector 2. A PCF in accordance with any of the embodiments described herein may be used in a metrology apparatus such as that depicted in Figure 4.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1 incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate. As shown in Figure 5, a PCF may be used to deliver the radiation from the radiation source LSO. A PCF in accordance with any of the embodiments described herein may be used in a level sensor LS such as that depicted in Figure 5.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

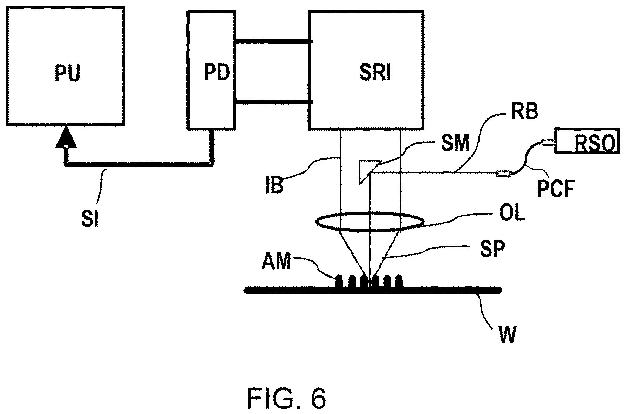

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself. As shown in Figure 6, a PCF may be used to deliver the radiation beam RB from the radiation source RSO. A PCF in accordance with any of the embodiments described herein may be used in an alignment sensor such as that depicted in Figure 6.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

It has been described above that the PCF in accordance with any of the embodiments described herein may be implemented in a lithographic apparatus or a metrology apparatus. Additionally, the PCF in accordance with any of the embodiments described herein may be implemented in a holographic metrology apparatus. The holographic metrology apparatus may be a component of a digital holographic microscope configured to determine a parameter of interest of a structure comprising at least one first feature oriented along a first axis of a structure coordinate system and at least one second feature oriented along a second axis of the structure coordinate system.

In a diffraction-based dark field metrology device, a beam of radiation is directed onto a metrology target and one or more properties of the scattered radiation are measured so as to determine a property of interest of the target. The properties of the scattered radiation may comprise, for example, intensity at a single scattering angle (e.g., as a function of wavelength) or intensity at one or more wavelengths as a function of scattering angle.

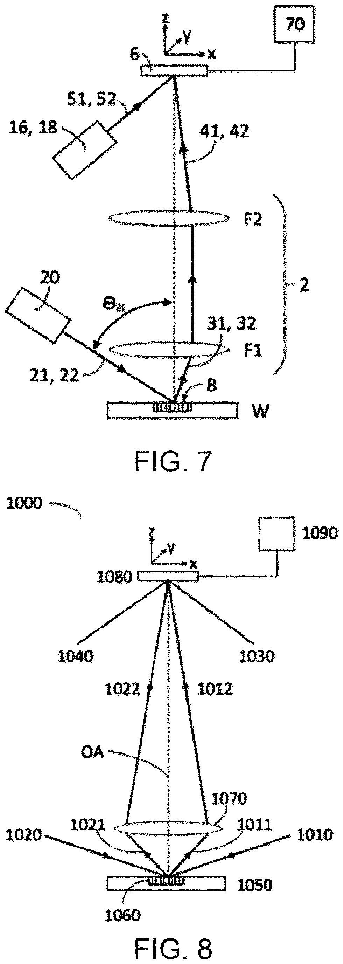

The international patent application WO2019197117A1, incorporated herein by reference, discloses a method and metrology apparatus based on a dark field digital holographic microscope (df-DHM) to determine a characteristic, e.g., overlay, of a structure manufactured on a substrate. For the purpose of description, Figure 3 of the international patent application WO2019197117A1 is replicated in Figure 7. Figure 7 schematically illustrates the disclosed df-DHM specifically adapted for use in lithographic process metrology.

The df-DHM in Figure 7 comprises a reference optical unit 16, 18 which is used to provide two reference illumination beams 51, 52 (the reference illumination). Such two reference illumination beams 51, 52 are respectively paired with two corresponding portions 41, 42 of the scattered radiation beams 31, 32 (the object radiation). The two scattered-reference beam pairs are used sequentially to form two interference patterns. Coherence control is provided by way of adjusting the relative optical path-length difference (OPD) between the two scattered-reference beams within each beam pair. However, no coherence control is available between the two beam pairs. A PCF in accordance with any of the embodiments described herein may be used in a holographic metrology apparatus such as that depicted in Figure 7 to deliver the illumination beams 21, 22 and/or reference illumination beams 51, 52.

Due to the use of a single light source and insufficient coherence control, all four radiation beams, i.e. the first portion 41 of the scattered radiation 31, the first reference illumination 51, the second portion 42 of the scattered radiation 32 and the second reference illumination 52, are mutually coherent. If these four mutually coherent radiation beams were allowed to reach the same position of the sensor 6 at the same time, namely operating in a parallel acquisition scheme, multiple interference patterns comprising desired information containing patterns and undesired artefact-contributing patterns would overlap each other. The undesired interference patterns may be formed by interference between e.g., the portion 41 of the first scattered radiation 31 and the portion 42 of the second scattered radiation 32. Since it would be technically challenging and time consuming to completely separate the superimposed interference patterns, parallel acquisition is impractical this arrangement.

The use of a sequential acquisition scheme in the example of Figure 7 allows the full NA of the objective lens to be available for both illumination and detection. However, the system suffers the same problem of low measurement speed due to sequential acquisition. Therefore, it is desirable to have a df-DHM capable of performing parallel acquisition such that a high measurement speed and a high design flexibility can be simultaneously obtained.

Figure 8 schematically illustrates the imaging branch of a dark field digital holographic microscope (df-DHM) 1000. A dark field digital holographic microscope (df-DHM) comprises an imaging branch and an illumination branch. In this embodiment, a metrology target 1060 comprising a structure on a substrate 1050 is illuminated by two illumination beams of radiation, i.e., a first illumination beam of radiation 1010 and a second illumination beam of radiation 1020. In an embodiment, such two illumination beams 1010, 1020 may simultaneously illuminate the metrology target 1060. A PCF in accordance with any of the embodiments described herein may be used in a holographic metrology apparatus such as that depicted in Figure 8 to deliver the first illumination beam of radiation 1010 and/or the second illumination beam of radiation 1020.

In an embodiment, the first illumination beam 1010 may be incident on the metrology target 1060 at a first angle of incidence in a first incidence direction with respect to the optical axis OA. The second illumination beam 1020 may be incident on the metrology target 1060 at a second angle of incidence in a second incidence direction with respect to the optical axis OA. The first angle of incidence of the first illumination beam 1010 and the second angle of incidence of the second illumination beam 1020 may be substantially the same. The angle of incidence of each illumination beam may be, for example in the range of 70 degrees to 90 degrees, in the range of 50 degrees to 90 degrees, in the range of 30 degrees to 90 degrees, in the range of 10 degrees to 90 degrees. The illumination of the metrology target 1060 may result in radiation being scattered from the target. In an embodiment, the first illumination beam 1010 may be incident on the metrology target 1060 at a first azimuthal angle, corresponding to the first direction. The second illumination beam 1020 may be incident on the metrology target 1060 at a second azimuthal angle, corresponding to the second direction. The first azimuthal angle of the first illumination beam 1010 and the second azimuthal angle of the second illumination beam 1020 may be different; e.g., opposing angles 180 degrees apart.

Depending on the structure of the metrology target 1060, the scattered radiation may comprise reflected radiation, diffracted radiation or transmitted radiation. In this embodiment, the metrology target may be a diffraction-based overlay target; and each illumination beam may correspond to a scattered beam comprising at least one non-zeroth diffraction order. Each scattered beam carries information of the illuminated metrology target. For example, the first illumination beam 1010 may correspond to the first scattered beam 1011 comprising the positive first diffraction order +1$^{st}$ DF; the second illumination beam 1020 may correspond to the second scattered beam 1021 comprising the negative first diffraction order -1$^{st}$ DF. The zeroth diffraction order and other undesired diffraction orders may either be blocked by a beam blocking element (not shown) or configured to completely fall outside the NA of the objective lens 1070. As a result, the df-DHM may be operated in a dark field mode. Note that, in some embodiments, one or more optical elements, e.g., a lens combination, may be used to achieve same optical effect of the objective lens 1070.

Both scattered beams 1011, 1021 may be collected by objective lens 1070 and subsequently re-focused onto an image sensor 1080. Objective lens 1070 may comprise multiple lenses, and/or df-DHM 1000 may comprise a lens system having two or more lenses, e.g., an objective lens and an imaging lens similar to the exemplary df-DHm of Figure 7, thereby defining a pupil plane of the objective lens between the two lenses and an image plane at the focus of the imaging lens. In this embodiment, a portion 1012 of the first scattered beam 1011 and a portion 1022 of the second scattered beam 1021 are simultaneously incident at a common position of the image sensor 1080. At the same time, two reference beams of radiation, i.e. a first reference beam 1030 and a second reference beam 1040, are incident on the same position of the image sensor 1080. Such four beams may be grouped into two pairs of scattered radiation and reference illumination. For example, the first scattered-reference beam pair may comprise the portion 1012 of the first scattered beam 1011 and the first reference beam 1030. Likewise, the portion 1022 of the second scattered-reference beam pair may comprise the second scattered beam 1021 and the second reference beam 1040. These two scattered-reference beam pairs may subsequently form two interference patterns (holographic images) which at least partially overlap in spatial domain. A PCF in accordance with any of the embodiments described herein may be used in a holographic metrology apparatus such as that depicted in Figure 8 to deliver the first reference beam 1030 and/or the second reference beam 1040.

In an embodiment, in order to separate the two at least partially, spatially overlapping interference patterns (e.g., in the spatial frequency domain), the first reference beam 1030 may have a first angle of incidence with respect to the optical axis OA and the second reference beam 1040 may have a second angle of incidence with respect to the optical axis OA; the first angle of incidence and the second angle of incidence being different. Alternatively or in addition, the first reference beam 1030 may have a first azimuthal angle with respect to the optical axis OA and the second reference beam 1040 may have a second azimuthal angle with respect to the optical axis OA; the first and second azimuthal angles being different.

In order to generate an interference pattern, the two beams of each scattered-reference beam pair should be at least partially coherent to each other, to a degree which is sufficient to form an interference pattern. Note that each scattered radiation beam may have a phase offset with respect to its corresponding illumination radiation. For example, at the image plane of the image sensor 1080, such a phase offset may comprise contributions due to the optical path-length (OPD) from the metrology target 1060 to the image sensor 1080, and by the interaction with the metrology target. As described above, it is necessary to control the coherence between the first scattered-reference beam pair and the second scattered-reference beam pair such that each beam of one pair is incoherent to any beam of the other pair. In other words, interference should only occur between the beams within the same beam pair and suppressed between different beam pairs. In such a manner, only desired interference patterns, e.g., the two interference patterns formed by respect scattered-reference beam pairs, are formed in a superimposed manner on the image sensor 1080, thus obviating the problem of separating or removing undesired interference patterns.

The metrology devices described above may provide overlay measurements corresponding to features, or displacements between two layers that are on top of each other, along a particular axis. For example, the dark field digital holographic microscope (df-DHM) 1000 of Figure 8 comprises a first illumination beam incident on a metrology target 1060 at a first azimuthal angle, corresponding to a first direction. The df-DHM 1000 also comprises a second illumination beam 1020 incident on the metrology target 1060 at a second azimuthal angle, corresponding to a second direction. The first azimuthal angle and the second azimuthal angle may be different, e.g. opposing angles 180 degrees apart.

A metrology device such as the df-DHM 1000 may be suitable for acquiring overlay measurements of features along the axis on which the illumination beams are positioned. For example, the illumination beams may be aligned along an x-axis, and may subsequently provide respective scattered beams corresponding to positive diffraction orders and negative diffraction orders. In particular, the first illumination beam 1010 may provide a scattered beam comprising at least the positive first diffraction order +1$^{st}$ DF, whilst the second illumination beam may provide a scattered beam comprising at least the negative first diffraction order-1$^{st}$ DF. Accordingly, an x-component of the overlay may be provided by the df-DHM in this setup. Similarly, the illumination beams may be aligned along a y-axis, and may subsequently provide respective scattered beams corresponding to positive diffraction orders and negative diffraction orders. In particular, the first illumination beam 1010 may provide a scattered beam comprising at least the positive first diffraction order +1$^{st}$ DF, whilst the second illumination beam may provide a scattered beam comprising at least the negative first diffraction order-1$^{st}$ DF. Accordingly, a y-component of the overlay may be provided by the df-DHM in this setup.

A limitation of the metrology devices, such as the df-DHM 1000, is that the overlay measurements may only comprise overlay components along a certain axis, such as the x-component OVx discussed above. To acquire other overlay components, such as the y-component OVy, additional measurements are required. For example, in order for the df-DHM 1000 of Figure 8 to acquire both x-components OVx and y-components OVy of the overlay, a rotation of the illumination beams with respect to the wafer may be required. This may be achieved by, for example, a rotation of the wafer, a rotation of the illumination beams about an optical axis, or a combination thereof. A disadvantage of rotating the illumination beams with respect to the wafer may be that a throughput of the metrology device is reduced, due to the time taken to rotate the illumination beams with respect to the wafer.

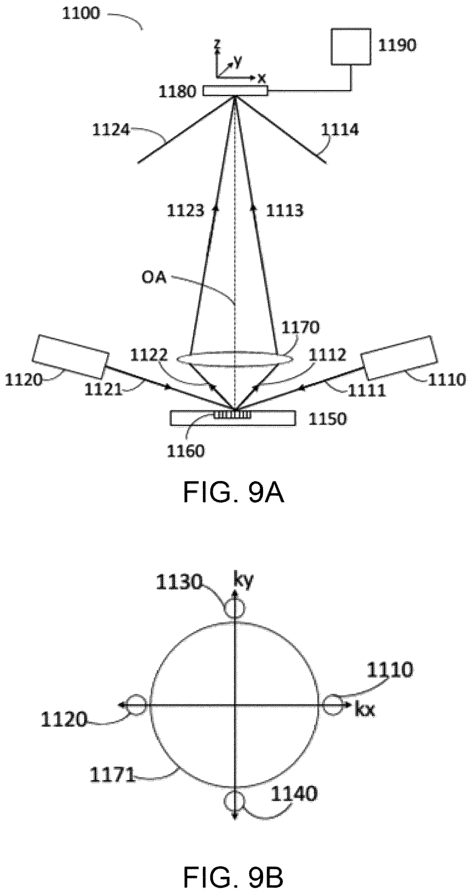

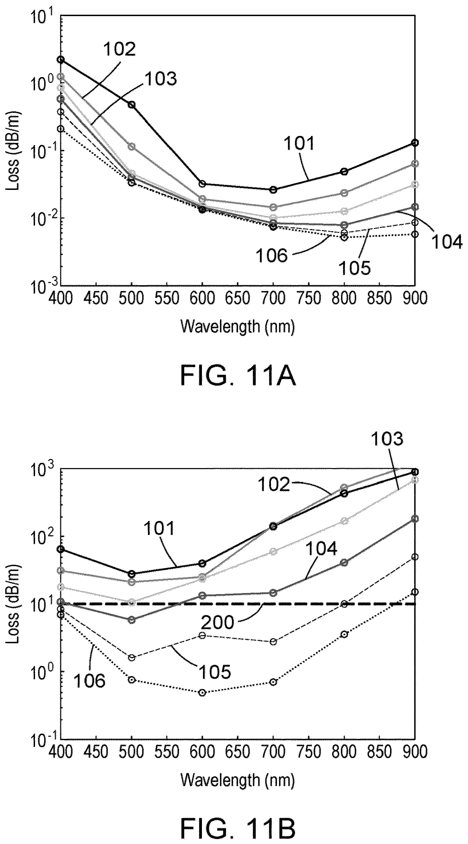

Alternatively, a means for acquiring both x-components OVx and y-components OVy of the overlay may comprise utilizing an additional set of illumination beams. Figure 9A schematically illustrates a dark-field digital holographic microscope (df-DHM) 1100 similar to the df-DHM 1000 of Figure 8, but comprising a first set of illuminators and a second set of illuminators. Figure 11B schematically illustrates the relative k-vectors of illumination beams provided by the illuminators in k-space with respect to an objective lens 1170 of the df-DHM 1100.

The df-DHM 1100 may be used to measure x-components OVx and y-components OVy of the overlay of a structure 1160 comprising x-features (or first features) oriented along an x-axis (or first axis of the structure coordinate system), and y-features (or second features) oriented along a y-axis (or second axis of the structure coordinate system) with respect to a coordinate system of the structure 1160. The structure 1160 may comprise a set of substructures. The set of substructures may comprise 2 layers, each layer comprising at least one x-oriented feature and at least one y-oriented feature. For example, each layer may comprise a feature comprising at least one x-oriented feature and at least one y-oriented feature. In some embodiments, each layer comprises 2 x-oriented features, and 2 y-oriented features. It will be appreciated that each layer may comprise any number of x-oriented features and y-oriented features. The layers may be stacked on top of each other. Whilst it has been described that each feature is oriented along a particular axis, it will be appreciated that each feature may be at least partially oriented along the axis.

In particular, as shown in Figure 9A, the first set of illuminators may comprise a first x-illuminator 1110 and second x-illuminator 1120. The first x-illuminator 1110 may provide a first x-illumination beam 1111 arranged to provide a first x-scattered beam 1112 having at least a positive first x-diffraction order +1st x-DF. The second x-illuminator 1120 may provide a second x-illumination beam 1121 arranged to provide a second x-scattered beam 1122 having at least a negative first x-

diffraction order -1st x-DF. The second set of illuminators may comprise a first y-illuminator 1130 (not shown in Figure 9A) and a second y-illuminator 1140 (not shown in Figure 9A). The first y-illuminator 1130 may provide a first y-illumination beam (not shown) arranged to provide a first y-scattered beam (not shown) having at least a positive first y-diffraction order +1st y-DF. The second y-illuminator 1140 may provide a second y-illumination beam (not shown) arranged to provide a second y-scattered beam (not shown) having at least a negative first y-diffraction order -1st y-DF.

Each illumination beam may be incident on the structure 1160 of a wafer 1150 at a respective angle of incidence with respect to an optical axis OA. The angle of incidence of each illumination beam may be substantially the same. The angle of incidence of each illumination beam may be, for example in the range of 70 degrees to 90 degrees, in the range of 50 degrees to 90 degrees, in the range of 30 degrees to 90 degrees, in the range of 10 degrees to 90 degrees.

Each illumination beam may be incident on the structure 1160 at a respective azimuthal angle, with the relative position of each illuminator with respect to the objective lens 1170 being illustrated in Figure 9B. Figure 9B provides a visualization in pupil space or k-space (in the $(k_x, k_y)$ plane) of the relative position of each illuminator with respect to the objective lens 1170. The objective lens 1170 defines a numerical aperture labelled 1171 in Figure 9B. Radiation outside this region defined by the numerical aperture 1171 will not be captured by the objective lens 1170 and cannot therefore contribute to the interference pattern captured by the image sensor 1180. Radiation inside the region may be captured by the objective lens 1170 and may therefore contribute to the interference pattern recorded by the image sensor 1180. The azimuthal angle of a beam refers to the angle between the x-axis and the incident beam or its projection in the x-y plane. The first x-illuminator 1110 may provide the first x-illumination beam 1111 at a first azimuthal angle of 0 degrees. The second x-illuminator 1120 may provide the second x-illumination beam 1121 at a second azimuthal angle of 180 degrees. The first y-illuminator 1130 may provide the first y-illumination beam at a third azimuthal angle of 90 degrees. The second y-illuminator 1140 may provide the second y-illumination beam at a fourth azimuthal angle of 270 degrees.

Each scattered beam 1011, 1021 may be collected by objective lens 1170 and subsequently re-focused onto an image sensor 1180. Objective lens 1170 may comprise multiple lenses, and/or df-DHM 1100 may comprise a lens system having two or more lenses, e.g., an objective lens and an imaging lens similar to the exemplary df-DHM of Figure 7, thereby defining a pupil plane of the objective lens between the two lenses and an image plane at the focus of the imaging lens.

As illustrated in Figure 9A, a portion 1113 of the first x-scattered beam 1112 and a portion 1123 of the second x-scattered beam 1122 are simultaneously incident at a common position of the image sensor 1180. At the same time, two x-reference beams of radiation, i.e. a first x-reference beam 1114 and a second x-reference beam 1124, are incident on the same position of the image sensor 1180. The first x-reference beam 1114 may be provided by a first reference illuminator (not shown), and the second x-reference beam may be provided by a second reference illuminator (not shown). Such four beams may be grouped into two pairs of x-scattered radiation and x-reference illumination. For example, the first scattered-reference beam pair may comprise the portion 1113 of the first x-scattered beam 1112 and the first x-reference beam 1114. Likewise, the second scattered-reference beam pair may comprise the portion 1123 of the second x-scattered beam 1122 and the second x-reference beam 1124. These two scattered-reference beam pairs may subsequently form two interference patterns (holographic images) which may provide imaging information for the x-features of the structure 1160. A PCF in accordance with any of the embodiments described herein may be used in a holographic metrology apparatus such as that depicted in Figure 9A to provide one or more of: the first x-illumination beam 1111, the second x-illumination beam 1121, the first x-reference beam 1114, the second x-reference beam 1124, the first y-illumination beam, second y-illumination beam, the first y-reference beam, and the second y-reference beam.

Similarly, when the df-DHM 1100 utilizes the first and second y-illumination beams, two y-reference beams of radiation, i.e. a first y-reference beam (not shown) and a second y-reference beam (not shown), may be simultaneously incident on the same position of the image sensor 1180 as the first y-scattered beam and the second y-scattered beam, respectively. Such four beams may also be grouped into two pairs of y-scattered radiation and y-reference illumination. For example, the first scattered-reference beam pair may comprise a portion of the first y-scattered beam and the first y-reference beam. Likewise, the second scattered-reference beam pair may comprise a portion of the second y-scattered beam and the second y-reference beam. These two scattered-reference beam pairs may subsequently form two interference patterns (holographic images) which may provide imaging information for the y-features of the structure 1160.

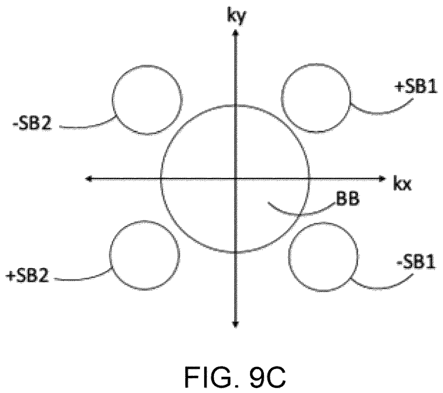

To enable parallel acquisition of all information needed to determine one overlay component, e.g. the x-overlay component, the reference illuminators may be arranged such that each reference beam interferes only with the corresponding portion of the scattered beam in its scattered-reference beam pair. Using the x-overlay component as an example, in order to separate the two at least partially, spatially overlapping interference patterns (e.g., in the spatial frequency domain), the first x-reference beam 1114 may have a first angle of incidence with respect to the optical axis OA and the second x-reference beam 1124 may have a second angle of incidence with respect to the optical axis OA; the first angle of incidence and the second angle of incidence being different. Alternatively or in addition, the first x-reference beam 1114 may have a first azimuthal angle with respect to the optical axis OA and the second x-reference beam 1124 may have a second azimuthal angle with respect to the optical axis OA; the first and second azimuthal angles being different. In this way, each reference beam may interfere only with light from one illuminator, and the orientation of the interference fringes on the image sensor 1180 may be altered by choosing the incident angle and/or azimuthal angle of each reference beam. Figure 9C depicts an image spectrum in the spatial frequency domain. The image spectrum comprises a zeroth order spatial frequency domain comprising a base spatial spectrum or base band BB comprising zeroth order Fourier components and two (identical) high order spatial spectra or sidebands +SB1 and +SB2 of the positive first x-diffraction order +1st, and two (identical) high order spatial spectra or sidebands -SB1 and -SB2 of the negative first x-diffraction order -1st. The positions of the high order spatial spectra can be adjusted with respect to the base spectrum, by, for example, changing the incident angle and/or azimuthal angle of each x-reference beam.

The df-DHM 1100 may illuminate the structure 1160 using the first set of illuminators and reference illuminators, such that an x-component of the overlay is provided. Subsequently, the df-DHM may illuminate the metrology target using the second set of illuminators and reference illuminators, such that a y-component of the overlay is provided. Furthermore, if only the first set of illuminators are used, then only features that scatter light along the x-direction will be imaged by the image sensor 1180, while if only the second set of illuminators are used, then only features that scatted light along the y-direction will be imaged by the image sensor 1180. A disadvantage of the df-DHM 1100 is that four illuminators are required to provide a full overlay measurement in both directions of the substrate/target plane. Illuminators are relatively complex and expensive parts. Therefore, this requirement for four illuminators may increase the complexity and cost of the df-DHM 1100.

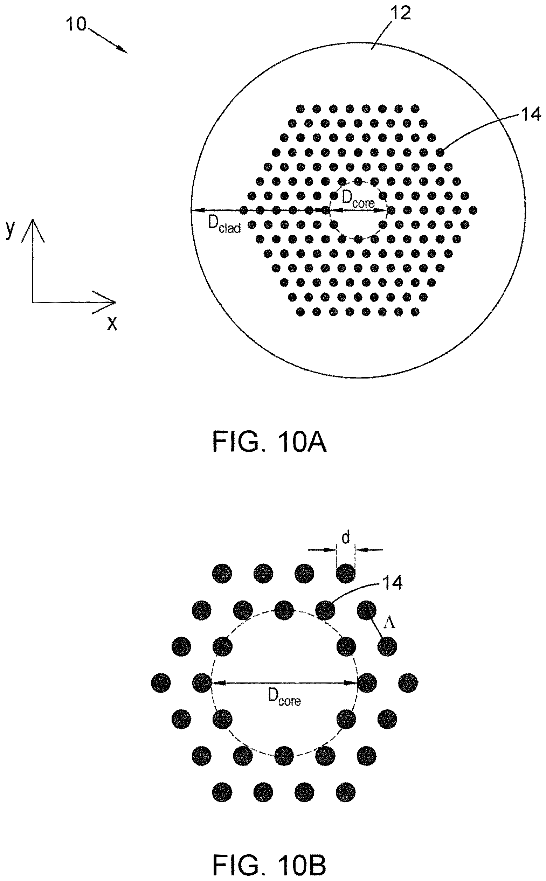

We now describe, with reference to Figures 10A and 10B, the photonic crystal fiber (PCF) which may be employed in the apparatuses described above.

As shown in Figure 10A, the PCF 10 includes a core region and a cladding region surrounding the core region. Both the core region and the cladding region comprise a background material 12 having a first refractive index ($n_B$). The cladding region additionally comprises a plurality of microstructures 14 (otherwise termed inclusions) extending from an input end of the fiber along a longitudinal axis (in the z-direction) of the fiber to an output end of the fiber. The plurality of microstructures have a second refractive index ($n_{inc}$) where $n_{inc} < n_B$.

The background material 12 may comprise silica glass, such as fused silica, or other specialty glass such as soft glasses, e.g. ZBLAN.

The plurality of microstructures 14 may comprise a medium having the second refractive index ($n_{inc}$). This medium may be a solid material. The solid material may be a doped material such as doped silica. The doping material may for example be Fluorine (F), Germanium (Ge), phosphorus (P), and/or Boron (B). In embodiments whereby the doped silica comprises silica doped with fluorine, the mole percentage of the fluorine may for example be in a range of 1-10%, such as in a range of 3-8%.

In other embodiments, the plurality of microstructures 14 comprise air such that the plurality of microstructures are hollow. In yet further embodiments, the plurality of microstructures comprise a vacuum.

As shown in Figure 10A and 10B, the plurality of microstructures 14 in the cladding region are arranged in a cross-sectional pattern comprising at least one ring of microstructures surrounding the core region. In the context of the present application, the phrase "ring of microstructures" refers to the cladding microstructures typically having substantially equal radial distance to the core and being aligned in a ring configuration surrounding the core. Typically, a ring of microstructures is not fully circular, but rather is shaped with a number of soft angles, such as in a hexagonal shape. Preferably all the microstructures of a ring of microstructures are of substantially the same size and preferably of the same material.

Whilst Figure 10A shows the PCF 10 having six rings of microstructures 14 it will be appreciated that this is merely an example. In some embodiments, there is only a single ring of microstructures. In other embodiments, there are multiple rings of microstructures for example at least six rings, such as at least 7 rings, such as at least 8 rings.

As shown in Figure 10B, each microstructure has a diameter (d), and a pitch A of the microstructures is defined as the center-to-center distance between neighboring microstructures.

The diameter of the core region is shown in Figure 10A and 10B as $D_{core}$, and the diameter of the cladding region is shown in Figure 10A as $D_{clad}$. The geometrical diameter of the core region ($D_{core}$) is defined as the diameter of a circle enclosed by the first ring of microstructures, given by the distance between microstructures at opposing vertices of the hexagonal ring of microstructures which is closest to (i.e. immediately adjacent to) the core region. The diameter of the core region is given by:

$$D_{\mathrm{core}} = 4\Lambda - d$$

That is, the diameter of the core region is given by four times a pitch of the microstructures minus a diameter of each of the microstructures. As can be seen in Figure 10B the circle touches an edge (closest to the centre of the PCF 10) of the microstructures in the corners of the hexagon formed by the 12 microstructures (see the dashed line). It can be seen that the circle does not touch an edge (closest to the centre of the PCF 10) of the microstructures in the sides of the hexagon formed by the 12 microstructures.

For example, in one embodiment to satisfy the above requirement, the ring of microstructures which is closest to (i.e. immediately adjacent to) the core region has 12 microstructures, as shown most clearly in Figure 10B.

The diameter of the core region is at least 16 $\mu$m. The diameter of the core region may be less than 50 $\mu$m, such as less than 47 $\mu$m. The PCF 10 has a transmission bandwidth of about 200 nm or more, such as of about 300 nm or more, such as of about 400 nm or more, such as of about 500 nm or more. In an embodiment, the transmission bandwidth is defined as the wavelengths where the delivery fiber has a transmission loss for a fundamental mode of less than 0.5 dB/m. In another embodiment, the transmission bandwidth is defined as the wavelengths where the delivery fiber has a transmission loss for a fundamental mode of less than 0.1 dB/m. Advantageously the transmission loss is measured when the PCF 10 is bent with a bending diameter of at least 10 cm, preferably between 10 cm and 12 cm to delocalize the higher-order modes. Advantageously the PCF 10 is single mode for at least one wavelength within the transmission bandwidth. Generally the beam of light has a much higher quality for single mode light than for multimode light and for some applications single mode light is a requirement. Preferably the PCF 10 is single mode for at least 50%, such as at least 80% of the transmission bandwidth, such as for the entire transmission bandwidth of the PCF 10.

The transmission bandwidth of the PCF 10 may comprise wavelengths within a range of 200 nm to 2500 nm, such as wavelengths within a range of 400 nm to 2000 nm, such as wavelengths within a range of 400 nm to 1200 nm, such as wavelengths within a range of 400 nm to 900 nm. In an embodiment the transmission bandwidth of the PCF 10 comprises wavelengths within the range of from 400 nm to 900 nm. The transmission bandwidth of the PCF 10 comprises at least a bandwidth of 200 nm, such as at least a bandwidth of 300 nm, such as at least a bandwidth of 400 nm, such as the entire bandwidth (e.g. within the range of from 400 nm to 900 nm).

The PCF 10 may be either a polarization-maintaining (PM) fiber or a non-PM fiber. A PM fiber is a fiber in which linear polarization can be maintained if linearly polarized light is launched into the fiber. Advantageously the launched polarized light maintains a linear polarization during propagation along the PM delivery fiber and exits the fiber in a linear polarization state.

Generally, the PCF 10 may be at least 10 cm in length, for example at least 3m in length. In some embodiments, the PCF may be up to 100m in length, such as between 20m and 80m in length.

A contributing factor to the optical properties of the PCF 10 is the normalized inclusion diameter (d/A) which corresponds to a ratio of the diameter (d) of each of the microstructures and the pitch A of the microstructures. The d/A ratio is preferably within the range 0.35-0.4. The table below gives some example values for the pitch A, the diameter (d), the normalized inclusion diameter (d/A), and the resulting diameter of the core region ($D_{core}$) of the PCF 10:

| $\Lambda$ ($\mu$m) | d/$\Lambda$ | D ($\mu$m) | $D_{core}$ ($\mu$m) |
|---|---|---|---|
| 4.55 | 0.35 | 1.5925 | 16.6075 |
| 4.55 | 0.37 | 1.6835 | 16.5165 |
| 4.55 | 0.4 | 1.82 | 16.38 |
| 4.6 | 0.37 | 1.702 | 16.698 |
| 4.8 | 0.37 | 1.776 | 17.424 |
| 5 | 0.37 | 1.85 | 18.15 |

In some embodiments of the present invention, the d/A ratio is less than 0.42 (for an air-clad PCF) to ensure that the PCF 10 is single mode for at least wavelengths in the range of 500-900 nm, such as at least wavelengths in the range of 400-900 nm.

Figure 11A illustrates example loss behaviour of a fundamental mode propagating through (a bent) photonic crystal fibers having a core region diameter of 16.5 $\mu$m and each having 7 rings of microstructures, but having differing values of normalized inclusion diameter (d/A), and Figure 11B illustrates example loss behaviour of higher order modes propagating through the (bent) photonic crystal fibers each having 7 rings of microstructures. The bending diameter was 11 cm.

In Figures 11A and 11B, waveform 101 corresponds to the PCF 10 having a d/A ratio of 0.35, waveform 102 corresponds to the PCF 10 having a d/A ratio of 0.36, waveform 103 corresponds to the PCF 10 having a d/A ratio of 0.37, waveform 104 corresponds to the PCF 10 having a d/A ratio of 0.38, waveform 105 corresponds to the PCF 10 having a d/A ratio of 0.39, and waveform 106 corresponds to the PCF 10 having a d/A ratio of 0.40.

In Figure 11B, the dashed line 200 represents the minimum loss level (10 dB/m) of the higher-order modes that is required such that the PCF 10 is single mode.

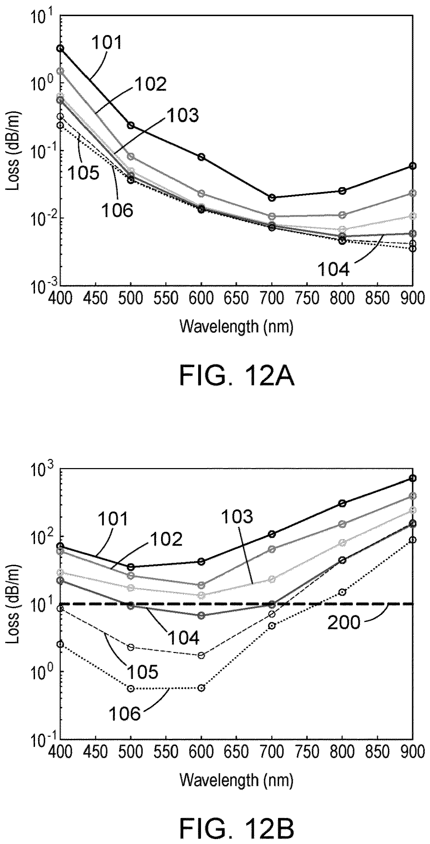

Figure 12A illustrates example loss behaviour of a fundamental mode propagating through (a bent) photonic crystal fibers having a core region diameter of 16.5 $\mu$m and each having 8 rings of microstructures but having differing values of normalized inclusion diameter (d/A), and Figure 12B illustrates example loss behaviour of higher order modes propagating through the (bent) photonic crystal fibers each having 8 rings of microstructures. The bending diameter was 11 cm.

In Figures 12A and 12B, waveform 101 corresponds to the PCF 10 having a d/A ratio of 0.35, waveform 102 corresponds to the PCF 10 having a d/A ratio of 0.36, waveform 103 corresponds to the PCF 10 having a d/A ratio of 0.37, waveform 104 corresponds to the PCF 10 having a d/A ratio of 0.38, waveform 105 corresponds to the PCF 10 having a d/A ratio of 0.39, and waveform 106 corresponds to the PCF 10 having a d/A ratio of 0.40.

In Figure 12B, the dashed line 200 represents the minimum loss level (10 dB/m) of the higher-order modes that is required such that the PCF 10 is single mode, i.e. has a single mode behaviour.

From Figures 11A/B and 12A/B it can be observed that for a PCF 10 having a core region diameter of 16.5 $\mu$m, having d/$\Lambda \le 0.37$ ensures delocalization of higher-order modes is facilitated such that the PCF 10 is single mode for the entire transmission bandwidth of 400 nm to 900 nm.

It will be appreciated that the PCF having a core region diameter of 16.5 $\mu$m is merely an example. Similarly, a transmission bandwidth of 400 nm to 900 nm is merely an example. More generally, in embodiments whereby the core region diameter is at least 16 $\mu$m and is less than 50 $\mu$m, the PCF 10 is single mode for the entire transmission bandwidth when d/$\Lambda \le 0.42$, for example d/$\Lambda \le 0.37$. In some embodiments, the d/A ratio is in the range $0.35 \le d/\Lambda \le 0.40$, e.g. $0.35 \le d/\Lambda \le 0.37$.

Increasing the number of rings (Nr) of microstructures 14 widens the fiber spectral transmission band. By increasing the number of rings (Nr) of microstructures 14, the higher-order mode loss shows little change. In some embodiments of the present invention, the number of rings (Nr) of microstructures surrounding the core region is at least 6, for example 6, 7, 8 or 9.

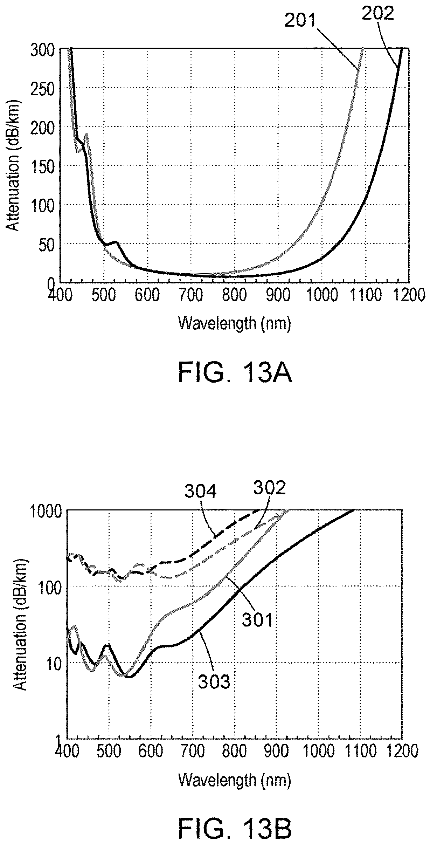

Figure 13A illustrates an example transmission loss waveform 201 for the fundamental mode propagating through the PCF 10 having a core region diameter of 16.5 $\mu$m when it has 7 rings of microstructures, and an example transmission loss waveform 202 for the fundamental mode propagating through the PCF 10 having a core region diameter of 16.5 $\mu$m when it has 8 rings of microstructures.

Figure 13B illustrates an example transmission loss waveform 301 for the first higher-order mode propagating through the PCF 10 when it has 7 rings of microstructures, and an example transmission loss waveform 302 for the second higher-order mode propagating through the PCF 10 when it has 7 rings of microstructures. Figure 13B also illustrates an example transmission loss waveform 303 for the first higher-order mode propagating through the PCF 10 when it has 8 rings of microstructures, and an example transmission loss waveform 302 for the second higher-order mode propagating through the PCF 10 when it has 8 rings of microstructures.

It can be observed from Figures 13A and 13B, that when the number of rings (Nr) of microstructures increases from 7 to 8 rings, the spectral width of the fundamental mode transmission band increases by approximately 100 nm. For wavelengths between 500 nm and 900 nm, the loss of the fundamental mode is less than 50 dB/km. At 400 nm, the loss is high and is equal to 610 dB/km. For the higher-order modes, the loss is greater than 10 dB/km expect for the wavelengths between 525 nm and 580 nm (Nr=8). Over this range, the lowest loss is around 6.5 dB/m. The results of Figures 13A and 13B also apply to a bent photonic crystal fiber with a bending diameter of 11cm.

As explained above, in embodiments of the present invention the PCF 10 has a transmission bandwidth of 200 nm or more, wherein the PCF has a transmission loss for a fundamental mode of less than 0.5 dB/m (e.g. less than 0.1 dB/m) within the transmission bandwidth. Advantageously the transmission loss is measured when the PCF 10 is bent with a bending diameter of at least 10 cm, preferably between 10 cm and 12 cm to delocalize the higher-order modes.

The bending direction may be applied along the x-axis or the y-axis. The inventors have observed that for wavelengths greater than 700 nm, the bending direction doesn't influence the fundamental mode loss. On the other hand in the y-axis bending direction, additional loss peaks appear for the short wavelengths (e.g. wavelengths less than or equal to 700 nm. For the higher-order modes, the variation amplitude of the higher-order mode loss is greater for a bending applied along the y-axis.

It is to be noted that in the context of this document one may also read a plurality inclusions instead of plurality of microstructures. In the context of this document, if one inclusion is addressed, one microstructure is addressed. For example, if the first ring of microstructures around the core has twelve microstructures, the meaning is equal to the first ring around the core has twelve inclusions. As defined in this document, the microstructures / inclusions are, in cross-sectional size, relatively small elements that extend in the elongated direction of the photonic crystal fiber, for example, from a first end of the photonic crystal fiber, to the other end of the photonic crystal fiber. The microstructures / inclusions are made of a solid material.

Additional embodiments are disclosed in the following list of numbered clauses:

1. A photonic crystal fiber comprising:

a core region;
a cladding region surrounding the core region;
wherein the core region and the cladding region comprise a material having a first refractive index, the cladding region additionally comprising a plurality of microstructures extending from an input end of the fiber along a longitudinal axis of the fiber to an output end of the fiber, the plurality of microstructures having a second refractive index which is less than the first refractive index; wherein the plurality of microstructures in the cladding region are arranged in a cross-sectional pattern comprising at least one ring of microstructures surrounding the core region, wherein a diameter of the core region is at least 16 $\mu$m,

the photonic crystal fiber having a transmission bandwidth of 200 nm or more.

2. The photonic crystal fiber of clause 1, wherein a ratio (d/$\Lambda$) between a diameter (d) of each of the microstructures and a pitch ($\Lambda$) of the microstructures is less than 0.42, preferably less than 0.37

3. The photonic crystal fiber of clause 2, wherein the ratio (d/$\Lambda$) is between 0.35 and 0.40.

4. The photonic crystal fiber of any preceding clause, wherein the photonic crystal fiber has a transmission loss for a fundamental mode of less than 0.5 dB/m within the transmission bandwidth when the fiber is bent with a bending diameter of at least 10 cm.

5. The photonic crystal fiber of clause 4, wherein the photonic crystal fiber has said transmission loss when the fiber is bent with a bending diameter of between 10 cm and 12 cm.

6. The photonic crystal fiber of any preceding clause, wherein the diameter (d) of the core region is given by four times a pitch ($\Lambda$) of the microstructures minus a diameter of each of the microstructures

7. The photonic crystal fiber of any preceding clause, wherein a pitch of the microstructures is less than 5 $\mu$m.

8. The photonic crystal fiber of any preceding clause, wherein the cross-sectional pattern comprises a plurality of rings of microstructures surrounding the core region.

9. The photonic crystal fiber of clause 8, wherein the cross-sectional pattern comprises at least six rings of microstructures surrounding the core region, preferably at least seven rings of microstructures surrounding the core region, preferably at least eight rings of microstructures surrounding the core region.

10. The photonic crystal fiber of any preceding clause, wherein a ring of microstructures immediately adjacent to the core region has twelve microstructures.

11. The photonic crystal fiber of any preceding clause, wherein the plurality of microstructures comprise a medium having the second refractive index.

12. The photonic crystal fiber of clause 11, wherein the medium is air such that the plurality of microstructures are hollow.

13. The photonic crystal fiber of clause 11, where the medium is a solid material.

14. The photonic crystal fiber of clause 13, wherein the medium is doped silica.

15. The photonic crystal fiber of clause 14, wherein the doped silica comprises silica doped with fluorine, wherein the mole percentage of the fluorine is optionally in a range of 1-10%, further optionally in a range of 3-8%.

16. The photonic crystal fiber of any preceding clause, wherein the material having the first refractive index is silica.

17. The photonic crystal fiber of any preceding clause, wherein the diameter of the core region is at least 20 μm.

18. The photonic crystal fiber of any preceding clause, wherein the diameter of the core region is less than 50 μm, preferably less than 47 μm.

19. The photonic crystal fiber of any preceding clause, wherein the transmission bandwidth of the delivery fiber comprises wavelengths within a range of 200 nm to 2500 nm.

20. A lithographic apparatus comprising the photonic crystal fiber of any preceding clause.

21. A metrology apparatus comprising the photonic crystal fiber of any of clauses 1 to 19.

22. The metrology apparatus of clause 21, further comprising a light source and a sensor for measuring a parameter of interest of a structure on a substrate and wherein the photonic crystal fiber is arranged to deliver light from the light source to the sensor.

23. The metrology apparatus of clause 21, further comprising a light source and a sensor for measuring a parameter of interest of a structure on a substrate and wherein the photonic crystal fiber is arranged to deliver light between components of the sensor.

24. A holographic metrology apparatus comprising the photonic crystal fiber of any of clauses 1 to 19.

25. A photonic crystal fiber comprising:

a core region;
a cladding region surrounding the core region;
wherein the core region and the cladding region comprise a material having a first refractive index, the cladding region additionally comprising a plurality of microstructures extending from an input end of the fiber along a longitudinal axis of the fiber to an output end of the fiber, the plurality of microstructures having a second refractive index which is less than the first refractive index; wherein the plurality of microstructures in the cladding region are arranged in a cross-sectional pattern comprising at least one ring of microstructures surrounding the core region, wherein a ring of microstructures immediately adjacent to the core region has twelve microstructures.

26. A photonic crystal fiber according to clause 25, wherein a diameter of the core region is at least 16 μm.

27. A photonic crystal fiber according to one of the clauses 25 or 26, wherein the photonic crystal fiber having a transmission bandwidth of 200 nm or more.

It is to be noted that the previously defined clauses 2 to 9 and 11 to 19 may be combined with the previously defined clauses 25, 26 or 27 as well.

Although specific reference may be made in this text to employing the PCF 10 in lithographic apparatus used in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. For example, the PCF 10 may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and the PCF 10 may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A photonic crystal fiber comprising:

a core region;
a cladding region surrounding the core region;
wherein the core region and the cladding region comprise a material having a first refractive index, the cladding region additionally comprising a plurality of microstructures extending from an input end of the fiber along a longitudinal axis of the fiber to an output end of the fiber, the plurality of microstructures having a second refractive index which is less than the first refractive index; wherein the plurality of microstructures in the cladding region are arranged in a cross-sectional pattern comprising at least one ring of microstructures surrounding the core region, wherein a diameter of the core region is at least 16 μm, the photonic crystal fiber having a transmission bandwidth of 200 nm or more.

2. The photonic crystal fiber of claim 1, wherein a ratio between a diameter of each of the microstructures and a pitch of the microstructures is less than 0.42, preferably less than 0.37

3. The photonic crystal fiber of any preceding claim, wherein the photonic crystal fiber has a transmission loss for a fundamental mode of less than 0.5 dB/m within the transmission bandwidth when the fiber is bent with a bending diameter of at least 10 cm.

4. The photonic crystal fiber of claim 3, wherein the photonic crystal fiber has said transmission loss when the fiber is bent with a bending diameter of between 10 cm and 12 cm.

5. The photonic crystal fiber of any preceding claim, wherein the diameter of the core region is given by four times a pitch of the microstructures minus a diameter of each of the microstructures

6. The photonic crystal fiber of any preceding claim, wherein a pitch of the microstructures is less than 5 μm.

7. The photonic crystal fiber of any preceding claim, wherein the cross-sectional pattern comprises a plurality of rings of microstructures surrounding the core region and wherein, optionally, the cross-sectional pattern comprises at least six rings of microstructures surrounding the core region, optionally at least seven rings of microstructures surrounding the core region, optionally at least eight rings of microstructures surrounding the core region.

8. The photonic crystal fiber of any preceding claim, wherein a ring of microstructures immediately adjacent to the core region has twelve microstructures.

9. The photonic crystal fiber of any preceding claim, wherein the plurality of microstructures comprise a medium having the second refractive index.

10. The photonic crystal fiber of claim 9, where the medium is a solid material.

11. The photonic crystal fiber of any preceding claim, wherein the material having the first refractive index is silica.

12. The photonic crystal fiber of any preceding claim, wherein the diameter of the core region is less than 50 μm, preferably less than 47 μm.

13. A lithographic apparatus comprising the photonic crystal fiber of any preceding claim.

14. A metrology apparatus comprising the photonic crystal fiber of any of claims 1 to 12.

15. A holographic metrology apparatus comprising the photonic crystal fiber of any of claims 1 to 12.

FIG. 1

FIG. 2

FIG. 3

FIG. 4

FIG. 5

FIG. 6

FIG. 7

FIG. 8

FIG. 9A

FIG. 9B

FIG. 9C

FIG. 10A

FIG. 10B

FIG. 11A

FIG. 11B

FIG. 12A

FIG. 12B

FIG. 13A

FIG. 13B

Europäisches
Patentamt

European
Patent Office

Office européen
des brevets

# EUROPEAN SEARCH REPORT

Application Number

EP 23 16 8262

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 811 784 B2 (MUKASA KAZUNORI [JP]; FURUKAWA ELECTRIC CO LTD [JP]) 19 August 2014 (2014-08-19) | 1,3-15 | INV. G02B6/02 |
| A | * column 5, line 30 - column 7, line 17 * * figures 1-2,4,23-24,32-33,38-40,47-49,58-59 * | 2 | |
| X | US 9 121 995 B2 (TANIGAWA SHOJI [JP]; TAKENAGA KATSUHIRO [JP] ET AL.) 1 September 2015 (2015-09-01) | 1,3-15 | |
| A | * column 6, line 19 - column 19, line 48 * * claims 1,4 * * figures 1-9 * | 2 | |
| A | MUKASA K ET AL: "Comparisons of merits on wide-band transmission systems between Using extremely improved solid SMFs with Aeff of 160Î1?4m2 and loss of 0.175dB/km and Using large-Aeff holey fibers enabling transmission over 600nm bandwidth", OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24 February 2008 (2008-02-24), pages 1-3, XP031440547, ISBN: 978-1-55752-856-8 * Section 3; page 2 - page 3 * * table 3 * * figures 4-9 * | 1-15 | TECHNICAL FIELDS SEARCHED (IPC) G02B |
| A | US 2016/209586 A1 (FOKOUA ERIC RODRIGUE NUMKAM [GB] ET AL) 21 July 2016 (2016-07-21) * paragraphs [0079] - [0100] * * figures 8-12 * | 1-15 | |

The present search report has been drawn up for all claims

| Place of search | Date of completion of the search | Examiner |
|---|---|---|
| Berlin | 31 August 2023 | Moroz, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 8262

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2023

| Patent document cited in search report | | Publication date | Patent family member(s) | | Publication date |
|---|---|---|---|---|---|
| US 8811784 | B2 | 19-08-2014 | NONE | | |
| US 9121995 | B2 | 01-09-2015 | CN | 102782537 A | 14-11-2012 |
| | | | EP | 2530502 A1 | 05-12-2012 |
| | | | JP | 5430679 B2 | 05-03-2014 |
| | | | JP | WO2011093349 A1 | 06-06-2013 |
| | | | US | 2012288247 A1 | 15-11-2012 |
| | | | WO | 2011093349 A1 | 04-08-2011 |
| US 2016209586 | A1 | 21-07-2016 | DK | 3047318 T3 | 31-08-2020 |
| | | | EP | 3047318 A1 | 27-07-2016 |
| | | | GB | 2518419 A | 25-03-2015 |
| | | | US | 2016209586 A1 | 21-07-2016 |
| | | | WO | 2015040187 A1 | 26-03-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10649136 B
- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B

- US 13000229 B
- US 13033135 B
- US 13533110 B
- US 13891410 B
- WO 2011012624 A
- US 20160161863 A
- US 20160370717 A1
- US 7265364 B
- US 7646471 B
- US 2010233600 A1
- WO 2016102127 A1
- US 6961116 B
- US 2015261097 A1
- WO 2019197117 A1